# EUROPEAN PATENT APPLICATION

(11) **EP 3 281 571 A1**
(43) Date of publication of application: **14.02.2018**
(21) Application number: 17184973.0
(22) Date of filing: 04.08.2017
(51) Int. Cl.: A47J 37/07

(54) **MULTIFUNCTIONAL BARBECUE**

(30) Priority: 11.08.2016 IT 201600084573
(71) Applicant: Ompagrill S.r.l., 36027 Rosa' (VI) (IT)
(72) Inventor: PAROLIN, Pietro Fabrizio, 36027 ROSA' VI (IT)
(74) Representative: Modiano, Micaela Nadia

(57) **Abstract**

A multifunctional barbecue (10), comprising:
- a heat diffusion vessel (11) with means for resting on the ground (12),
- an extractable combustion container (13) for pellets, which is inserted reversibly, with corresponding supporting means (14), in a position below the vessel (11) and is open onto the vessel (11),
- a tubular protective body (15) for the extractable combustion container (13), shaped so as to define, with the combustion container (13), a thermal insulation gap (16).

## Description

The present invention relates to a multifunctional barbecue.

Nowadays barbecues are known and increasingly widespread, which use a pellet burner to generate heat for cooking.

Pellet burners are generally made with a coaxial double chamber made of metallic material, for example of stainless steel.

A conventional pellet burner therefore has an internal container, for combustion, which contains the pellets, surrounded by an outer jacket that defines with it an annular chamber, in which the secondary air flows.

The primary air for pyrolitic gasification is introduced into the system from below through side holes arranged on the entire circumference of the outer jacket, in order to pass through the reaction bed in the internal container with an ascending flow.

The secondary air flows in the outer chamber toward the top where, through circumferential holes, it is made to flow over the biomass.

After the pellets are first lit, in the upper part a layer of carbon is formed below which pyrolysis occurs, which moves downward, gradually consuming all the biomass underlying it with formation of synthesis gases which, in their ascending motion, come into contact with the secondary air and give rise to a new combustion phase. This combustion entails the almost total oxidation of the synthesis gases obtained in the gasification step. Once this phase is exhausted, all that bums is the embers arranged on the bottom of the burner.

Conventional pellet-burning barbecues, although widespread and appreciated, have a number of drawbacks.

A first drawback is constituted by the fact that, although pellets produce very little ash, such ash must be removed.

In conventional pellet-burning barbecues, the burner is fixed to an overlying brazier or other, similar vessel, and to remove the ashes the operator has to use an aspiration device, introducing it into the burner by passing over the brazier.

In any case, as mentioned, in a double-chamber burner, the internal combustion container, with the perforated bottom for the passage of air, allows the ashes to fall into the underlying bottom of the outer jacket, from where it is substantially impossible to remove them, since the combustion container is stably fixed to the outer jacket and an aspiration device cannot physically reach the bottom of the outer jacket owing to the presence of the combustion container.

A second drawback of conventional pellet-burning barbecues is constituted by the fact that the burner must be enclosed especially in a protection structure, because it develops extremely high temperatures and contact by a user, intentional or unintentional, could be extremely dangerous.

The protection structures known today are constituted by variously shaped metal walls, which in addition to contributing to the final cost of the product, also define inconvenient encumbrances to be worked around when moving the barbecue and disassembling and storing it.

Another important limitation of the pellet-burning barbecues known today is constituted by the fact that they do not lend themselves well, if at all, to traditional use with wood or charcoal.

The aim of the present invention is to provide a multifunctional barbecue that is capable of overcoming the above mentioned drawbacks of conventional pellet-burning barbecues.

Within this aim, an object of the present invention is to provide a barbecue that is easier to clean than conventional barbecues.

Another object of the present invention is to provide a barbecue that is safe and at the same time is less cumbersome than conventional pellet-burning barbecues.

Another object of the present invention is to provide a barbecue with performance, efficiency and strength that are at least as good as conventional barbecues.

Another object of the present invention is to provide a barbecue that can also function with wood or with charcoal.

This aim and these and other objects which will become better evident hereinafter are achieved by a multifunctional barbecue according to claim 1.

Further characteristics and advantages of the invention will become better apparent from the description of three preferred, but not exclusive, embodiments of the pellet-burning barbecue according to the invention, which are illustrated for the purposes of non-limiting example in the accompanying drawings wherein:
- Figures 1, 1a, 1b, 1c are a perspective view and details of a barbecue according to the invention in a first embodiment thereof;

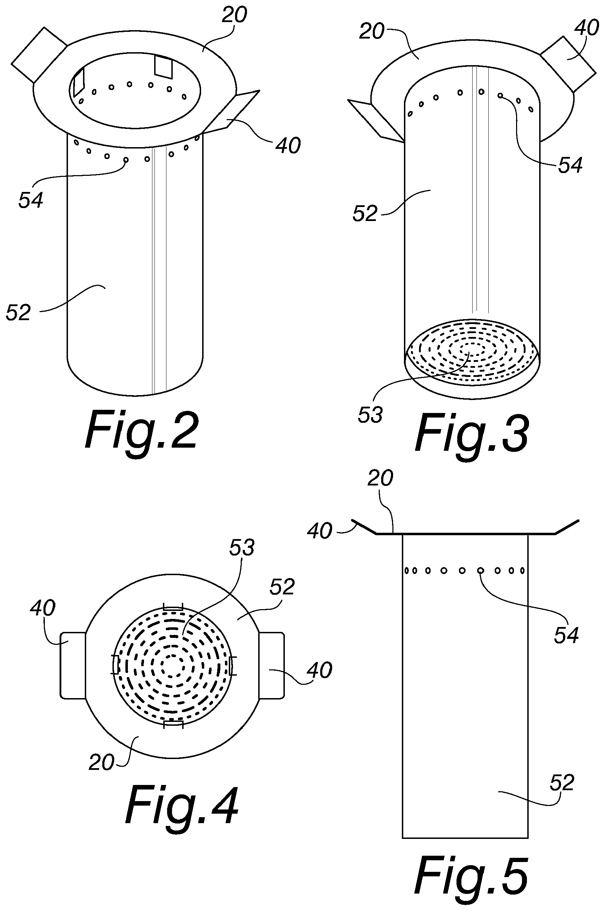

- Figures 2 to 5 are various views of a combustion container comprised in the barbecue according to the invention;

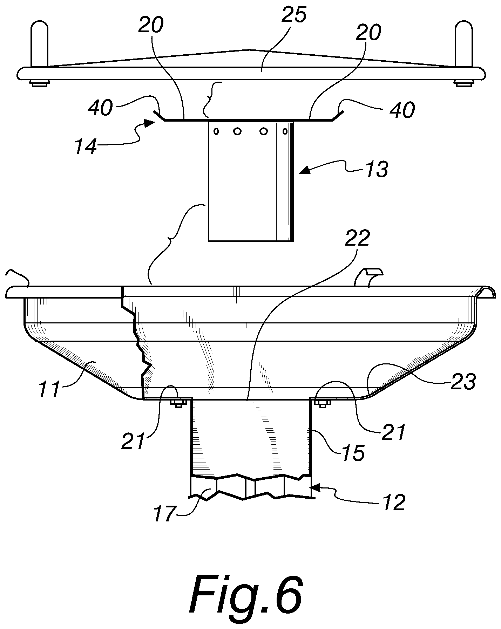

- Figure 6 is an exploded side view of the barbecue of Figure 1;
- Figure 7 is a partially cross-sectional side view of the barbecue, assembled;
- Figure 8 is a variation of use of the multifunctional barbecue according to the invention;
- Figure 9 is a perspective view of a barbecue according to the invention, in a second embodiment;
- Figure 10 is a partially cross-sectional front elevation view of the barbecue of Figure 9, assembled;
- Figure 11 is a schematic front elevation view of a barbecue according to the invention in a third embodiment thereof;
- Figure 12 is a perspective view of a deflector and of a cooking grille that can be applied to the barbecue according to the invention;
- Figure 13 is a cross-sectional side view of a portion of a barbecue according to the invention, with the deflector and the cooking grille of Figure 12.

With reference to the figures, a multifunctional barbecue according to the invention is generally designated, in a first embodiment thereof, with the reference numeral 10.

The barbecue 10 comprises:
- a heat diffusion vessel 11 with means for resting on the ground 12,
- an extractable combustion container 13 for pellets, which is inserted reversibly, with corresponding supporting means 14, in a position below the vessel 11 and is open onto the vessel 11,
- a tubular protective body 15 for the extractable combustion container 13, shaped so as to define, with the combustion container 13, a thermal insulation gap 16.

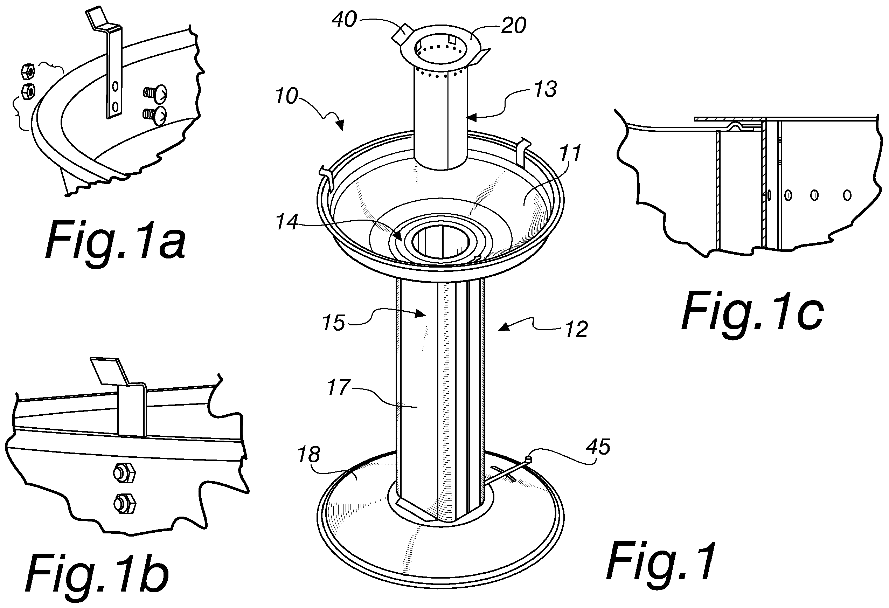

In such first embodiment of the barbecue 10 according to the invention, the combustion container 13 can be extracted in a vertical direction with respect to a configuration for use of the barbecue 10, as can clearly be seen in Figure 1.

The combustion container 10 is constituted by a single metallic cylinder 52 with a bottom grille 53 and a circumferential ring of holes 54 which is adjacent to the top.

The means for resting on the ground 12 comprise a tubular column 17 with a plate-like resting base 18, for example disk-like, which is wider than the width in cross-section of the tubular column 17.

In such first embodiment, the tubular protective body 15 for the extractable combustion container 13 is constituted by an upper portion 19 of the tubular column 17.

The supporting means 14 for the combustion container 13 in a position below the vessel 11 are constituted by a perimetric flap 20, which widens radially from the combustion container 13 and is adapted to rest against the underlying edge 21 of an opening 22, defined on the bottom 23 of the vessel 11, at which the upper end of the tubular column 17 is fixed.

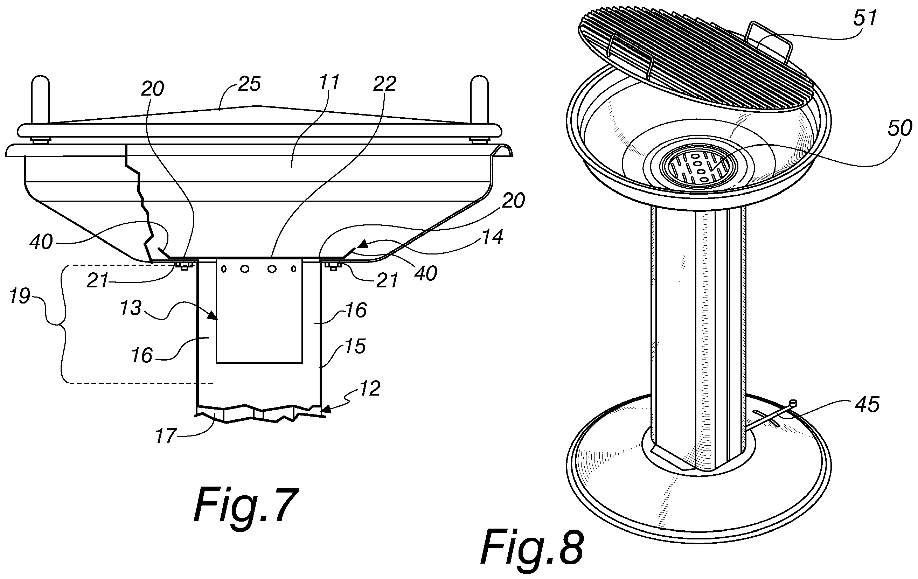

Figure 7, by way of example, shows a flat cooking body 25, for example a griddle or a grille, designed to be placed on top of the vessel 11.

A lid, not shown in the figures, can be positioned further upward.

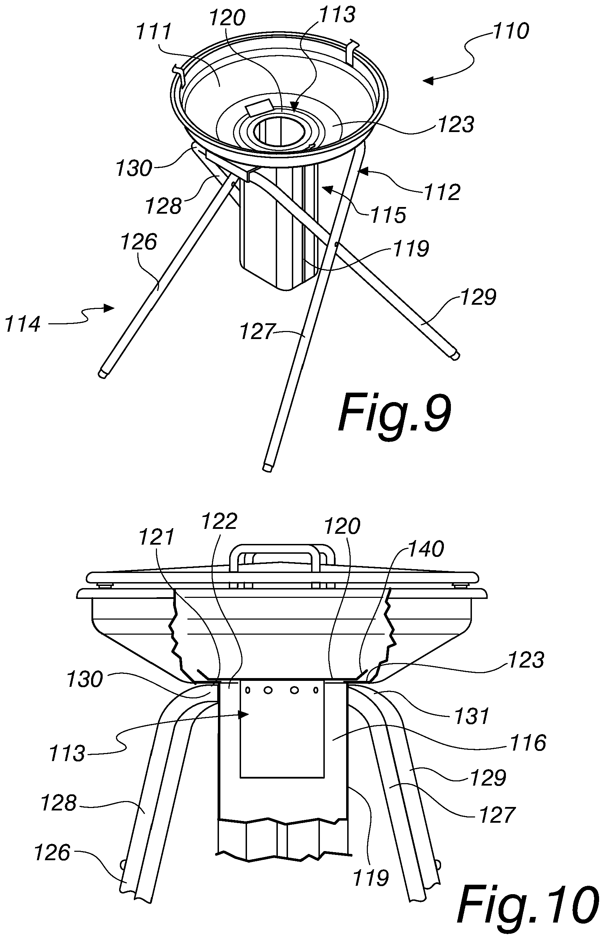

In a second embodiment of the pellet-burning barbecue according to the invention, shown in Figures 9 and 10 and designated therein with the reference numeral 110, the means for resting on the ground 112, which support the vessel 111, are constituted by a frame that can close in a scissor-like manner, with four legs 126, 127, 128 and 129 which are hinged in pairs and joined in pairs by an upper cross-member 130 and 131 respectively, the vessel 111 being fastened to such upper cross-members.

In such second embodiment, the tubular protective body 115 for the extractable combustion container 113 is constituted by a segment of tubular column 119 which is fixed to the bottom 123 of the vessel 111 so as to protrude downward.

The supporting means 114 for the combustion container 113 are constituted by a perimetric flap 120, which widens radially from the combustion container 113 and is adapted to rest against the underlying edge 121 of an opening 122, defined on the bottom 123 of the vessel 111, at which the upper end of the segment of tubular column 119 is fixed.

Gripping wings 40 and 140 extend upward from the perimetric flap 20 and 120, for manually moving the combustion container 13 and 113.

Figure 10 shows the thermal insulation space 116.

A secondary air intake, not visible in the figures, is defined on the tubular protective body 15 and 115, and can be opened and can be closed by way of a lever 45, which serves to boost or reduce the combustion.

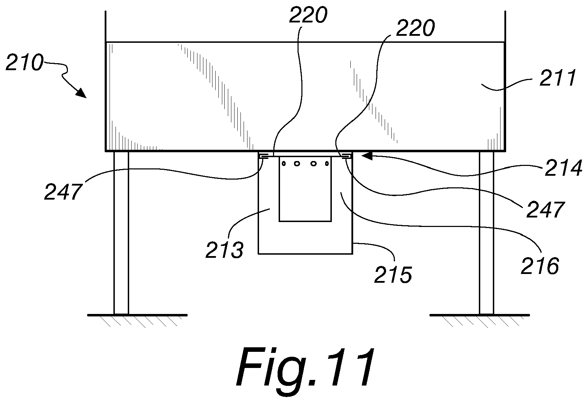

A third embodiment of a pellet-burning barbecue according to the invention is shown schematically in Figure 11 and designated therein with the reference numeral 210.
In such third embodiment of the barbecue 210 according to the invention, the combustion container 213 can be extracted in a horizontal direction with respect to a configuration for use of the barbecue 210, for example from a frontal position with respect to a preset use position for a user.

The supporting means 214 for the combustion container 213 are constituted by a perimetric flap 220, which widens radially from the combustion container 213 and is adapted to be inserted onto two opposite horizontal profiled guide elements 247, for example C-shaped in cross-section, which are fixed below the vessel 211.

The tubular protective body 215 is provided with an access door leaf, not shown for the sake of simplicity, which permits the insertion and extraction by horizontal translation of the combustion container 213 from inside it.

Figure 11 shows the thermal insulation gap, designated with the reference numeral 216.

The thermal insulation gap 16, 116, 216 is obviously also adapted to the passage of secondary combustion air toward the high part of the combustion container 13, 113 and 213.

The multifunctional barbecue according to the invention 10, 110 and 210 lends itself well to operation with wood or charcoal.

The barbecue 10, 110, 210 is in fact provided with a vessel 11, 111 and 211, which is in the shape of a brazier, and is therefore capable of containing wood or charcoal.

For operation with wood or charcoal, the combustion container 13, 113 and 213 is removed and a ventilation grille 50 for holding the embers and a cooking grille 51 are positioned at the opening 22 and 122, as shown for the purposes of example in Figure 8.

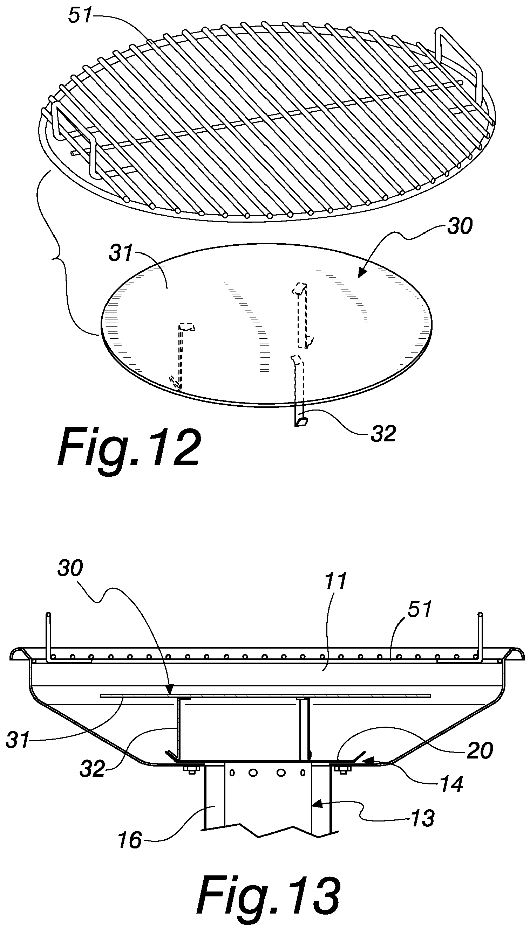

Figures 12 and 13 show a deflector 30 that can be applied to the barbecue according to the invention. It is constituted, for example, by a metal disk 31 supported by supporting elements 32, for example metal feet. The deflector 30 is inserted into the heat diffusion vessel 11, 111, 211 with the supporting elements 32 rested on or detachably anchored to the latter. The deflector 30 is arranged with the disk 31 above the extractable combustion container 13, 113, 213 so as to intercept the heat produced by it and to diffuse it below the cooking grille 51.

In practice it has been found that the invention fully achieves the intended aim and objects.

In particular, with the invention a barbecue has been devised that is easier to clean than conventional barbecues, by virtue of the easy extractability of the combustion container from the rest of the structure.

The combustion container is a single cylinder, differently from conventional types, which have a coaxial double chamber.

What is more, with the invention a barbecue has been devised that is safe and at the same time is less cumbersome than conventional pellet-burning barbecues, by virtue of the tubular protective body that incorporates the two functions of defining an annular chamber for the passage of secondary air and, at the same time, by virtue of the same annular chamber, retaining the heat emanated by the combustion container.

Furthermore, with the invention a multifunctional barbecue has been devised that, by virtue of the extractability of the combustion container, can easily be adapted to operate with wood or with charcoal, it being sufficient to position a ventilation grille on the opening for inserting and extracting the combustion container and adding a cooking grille and, optionally, a lid.

Furthermore, with the invention a barbecue has been devised that has performance, efficiency and strength that are at least as good as conventional pellet-burning barbecues.

The invention, thus conceived, is susceptible of numerous modifications and variations, all of which are within the scope of the appended claims. Moreover, all the details may be substituted by other, technically equivalent elements.

In practice the components and the materials employed, provided they are compatible with the specific use, and the contingent dimensions and shapes, may be any according to requirements and to the state of the art.

The disclosures in Italian Patent Application No. 102016000084573 (UA2016A006070) from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A multifunctional barbecue (10, 110, 210), **characterized in that** it comprises:
- a heat diffusion vessel (11, 111) with means for resting on the ground (12, 112),
- an extractable combustion container (13, 113, 213) for pellets, which is inserted reversibly, with corresponding supporting means (14, 114), in a position below said vessel (11, 111) and is open onto said vessel (11, 111),
- a tubular protective body (15, 115, 215) for said extractable combustion container (13, 113, 213), shaped so as to define, with said combustion container (13, 113, 213), a thermal insulation gap (16, 116, 216).

2. The barbecue according to claim 1, **characterized in that** said combustion container (13) can be extracted in a vertical direction with respect to a configuration for use of said barbecue (10).

3. The barbecue according to one or more of the preceding claims, **characterized in that** said means for resting on the ground (12) comprise a tubular column (17) with a plate-like resting base (18) which is wider than the width in cross-section of the tubular column (17).

4. The barbecue according to one or more of the preceding claims, **characterized in that** said tubular protective body (15) for said extractable combustion container (13) is constituted by an upper portion (19) of said tubular column (17).

5. The barbecue according to one or more of the preceding claims, **characterized in that** the supporting means (14, 114) for the combustion container (13, 113) in a position below said vessel (11, 111) are constituted by a perimetric flap (20, 120), which widens radially from the combustion container (13, 113) and is adapted to rest against the underlying edge (21, 121) of an opening (22, 122), defined on the bottom (23, 123) of the vessel (11, 111), at which the upper end of the tubular column (17) or of a segment of tubular column (119) is fixed.

6. The barbecue according to one or more of the preceding claims, **characterized in that** said means for resting on the ground (112), which support the vessel (111), are constituted by a frame that can close in a scissor-like manner.

7. The barbecue according to one or more of the preceding claims, **characterized in that** the tubular protective body (115) for said extractable combustion container (113) is constituted by a segment of tubular column (119) which is fixed to the bottom (123) of the vessel (111) so as to protrude downward.

8. The barbecue according to one or more of the preceding claims, **characterized in that** on the tubular protective body (15, 115) there is a secondary air intake, which can be opened and closed by way of a lever (45).

9. The barbecue according to one or more of the preceding claims, **characterized in that** said combustion container (213) can be extracted in a horizontal direction with respect to a configuration for use of said barbecue (210).

10. The barbecue according to one or more of the preceding claims, **characterized in that** it has a vessel (11, 111, 211) shaped like a brazier, capable of containing wood or charcoal, said combustion container (13, 113, 213) being removed and a ventilation grille (50) and a cooking grille (51) being positioned at the opening (22, 122).

11. The barbecue according to one or more of the preceding claims, **characterized in that** said combustion container (10) is constituted by a single metallic cylinder (52) with a bottom grille (53) and a circumferential ring of holes (54) which is adjacent to the top.

12. The barbecue according to one or more of the preceding claims, **characterized in that** it comprises a deflector (30).

13. The barbecue according to the preceding claim, **characterized in that** said deflector (30) is arranged within said vessel (11, 111, 211) and above said extractable combustion container (13, 113, 213) so as to intercept the heat produced by it and to transmit it to said cooking grille (51).

14. The barbecue according to the preceding claim, **characterized in that** said deflector (30) is constituted by a metallic disk (31) and by supporting elements (32) that are rested on or detachably anchored to said vessel (11, 111,211).
